# EUROPEAN PATENT APPLICATION

(11) **EP 1 696 648 A1**
(43) Date of publication of application: **30.08.2006**
(21) Application number: 06251060.7
(22) Date of filing: 28.02.2006
(51) Int. Cl.: H04M 3/42, H04M 3/50, H04M 3/487

(54) **System comprising a voice processing card and a host based protocol stack**

(30) Priority: 28.02.2005 US 657005
(71) Applicant: Eicon Networks Corporation, Montréal, Québec H4M 2V9 (CA)
(72) Inventor: Mielich, Rainer, 75210 Keltern (DE); Startsev, Vladimir, 70192 Stuttgart (DE)
(74) Representative: McKechnie, Neil Henry

(57) **Abstract**

The application relates to voice processing cards and their application in systems where multiple cards supporting different protocols are operated. Each protocol type is provided by a card which requires its specific device driver. As a result an application manufacturer needs to handle multiple different device drivers.
The problem is solved by a telephony card of the application which interfaces with a host based protocol stack. The protocol stack converts a new signalling protocol into an already supported signalling protocol and thereby avoids the need for a new device driver for the new protocol and limits thereby the number of device drivers an application manufacturer needs to handle. New signalling protocols in this respect are for example SS7, H.323 and SIP whereas an already supported signalling protocol is ITU-T Q.931.

## Description

### Cross-reference to Related Application

This application claims priority to U.S. Provisional Patent Application No. 60/657,005, filed February 28, 2005, which is incorporated herein by reference.

### Background of the invention

### 1. Field of the invention

The subject disclosure relates to telecommunications and more particularly to protocol software of communication adapters. The subject disclosure uses a multi-layered abstracting protocol implementation to facilitate communication between a low level unified protocol module and a low level abstraction protocol module. The subject disclosure also relates to protocol software of communication adapters, media resource adapters and host based protocol implementations, and to a possible scalable mixture of one or more host based protocol modules and protocol modules embedded on communication adapters and media resource adapters.

### 2. Background of the Related Art

For companies with more than a handful of employees, connecting every employee's telephone to the public telephone network is not practical because the public telephone network applies a monthly charge to each line. Moreover, internal calls would require dialing every digit and if the company has several locations, inter-location calls would be assessed long distance charges. As a result, companies establish a private business exchange (hereinafter referred to as "PBX" but also known as "PABX").

The PBX is a telephone switching center owned by the company rather than the common carrier. Various locations of the company can be interconnected by a dedicated line such as a trunk line so that the PBX can encompass the entire company. Users of the PBX share a certain number of outside lines for making and receiving telephone calls external to the PBX. The PBX performs a variety of functions, such as establishing and maintaining connections or circuits between the telephones of two users. Facsimile machines, communication modems and other communication devices can be connected to the PBX as desired. The PBX also provides other features such as usage information for accounting purposes, speed dialing, call forwarding, music on hold and the like.

Several systems have been developed to further enhance and increase the functionality of the PBX. Many electronic racks for such telecommunication systems contain a plurality of communication cards, such as Basic Rate Interface (BRI), Primary Rate Interface (PRI), Analog, T.1 Robbed Bit Signaling (RBS) cards for accessing channels associated with the PBX. A typical communication card has the ability to connect a cable to the communication network for connecting the hardware communication front end chip to the communication network. The protocol software for said chip typically resides on the communication adapter. Optionally, at the protocol code, a resource management for the Bearer Channels manages the availability of channels and related Digital Signal Processor (DSP). On top of the protocol software, the lowest level driver interface IDI to the host resides. In prior art systems with many different protocol types, third party protocol implementation is used because of complexity. However, there is a limitation in this architecture because the protocol code must fit in code size and interface architecture onto the communication card.

In addition, there is another limitation with the embedded communication protocol because a communication adapter can control itself only. This is sufficient with typical ISDN, T.1, E.1 or Analog applications, but with larger systems like SS7 (Signaling System No. 7) the protocol module needs to control the Bearer Channels of multiple E.1/T.1 network interfaces (trunks). Further, the protocol module might terminate multiple signaling links for Load Balancing (bundles multiple signaling links for a higher signaling bandwidth) capabilities. There is a need for a specific protocol module running on the host controlling multiple network trunks while the existing call control capabilities and local trunk related resource management functions stay embedded on the communication adapter with minimal changes only.

Further, the legacy telephone system is not well-suited to bandling data. To overconae this shortcoming, entities create and support a separate network for data communication. The data network could be a Local Area Network (LAN), wide area networks (WAN), or combinations thereof as is well known. Recently, communication technology has migrated toward using telephony and data communication over the same network by using Internet Protocol (IP). Tranporting phone calls over an IP network is commonly known as Voice over Internet Protocol (VoIP). In such a system, computers, IP telephones and like devices (endpoints) are connected to the IP network. The voice data of such phone calls over TP is transferred typically with a specific Real Time Protocol (RTP). To reduce the required bandwidth of such voice RTP data stream, it is common to use voice compression and conversion algorithms known as CODEC (for example the Adaptive Differential Pulse Code Modulation ADPCM G.726 (ITU-T)). If the application is developed to run with a different voice data format than used at the network, the conversion is also well known as "transcoding". The endpoints have a network card, such as an Ethernet card, for transporting data and the telephone calls. As a result, traditional communication adapters (e.g., ISDN adapters) and modems are not required.

To accommodate the many features of legacy telephone networks, applications, like Interactive Voice Response Systems (IVR) or Unified Messaging Servers (UMS), are using methods to detect and generate different tones (e.g., DTMF or generic tone detector, busy tone detector and the like), Voice Activity Detector (VAD), different modulations like Modem or Fax, Real Time Protocol (RTP), Echo Canceller, transcoding and voice compression. In order to process this different media, called Media Processing, additional applications arc being developed. Often the communication drivers are purely software running at the endpoint since the legacy communication adapter does not need to be present in systems running VoIP. This arrangement is known as Host Media Processing (HMP).

For larger systems, where many channels need to be processed, personal computer performance is often undesirably slow or intermittent. To enhance performance, it is common to add so called Media Resource Boards or communication adapters providing Digital Signal Processor (DSP) power to the application. In circumstances of hybrid installation (i.e., a system having HMP software and legacy communication adapters), or in circumstances where a Media Resource Board adds scalability to an HMP installation, all the different architectures are providing a different Application Programming Interface (hereinafter "API"). An API is a set of definitions of the ways in which the various modules communicate with each other. As a result, the applications are incompatible with each other or it is very complex for the application manufacturer to handle all the different device drivers. Further, it is common with hybrid installations that multiple device drivers and APIs are present in the system consuming a lot of driver memory such that performance deteriorates undesirably.

### Summary of the Invention

There is a need, therefore, for an improved module which permits distributing communication protocols in a flexible arrangement so that the communication adapter capabilities can be efficiently utilized, e.g. the 3^{rd} party protocol runs on the host while the existing call control capabilities and resource management functions stays embedded on the communication adapter with only minimal changes.

Still further, with larger installations, when the Signaling Channels are terminated on different computers than the Bearer Channels are, there is a need for a specific protocol module running on the host controlling multiple network trunks locally on the same computer and/or controlling multiple network trunks installed at different computers, while the existing call control capabilities and local trunk related resource management functions stay embedded on the communication adapter with minimal changes only.

In a further embodiment, the lowest level driver interface IDI preferably stays unchanged. As a result, the existing APIs, driver middleware and the SDK stays unchanged and as well as all existing applications written therefore. In other words, it is an object of the subject disclosure to provide an architecture and related interfaces enabling running protocol modules independent of the existing conununication adapter firmware and its related unchanged call control APIs.

It is an object to illustrate the development of a virtual signaling architecture that allows use of one API supporting multiple network architectures. An abstraction layer, at the lower interfaces, converts the higher layer API for the different network architectures. It also provides the ability for a single application to be used in many different network topologies. For example, applications developed using the SDK can be used for Analog, SoftIP 2.0/Voice over IP/IP, SS7, external third party protocol stacks and the like. In addition, the virtual signaling architecture allows having the different network topologies installed onto one machine, e.g., an ISDN termination and an IP termination.

It is another object of the subject disclosure to provide an architecture and related interfaces for enabling control of a protocol module multiple network trunks within a computer, independent of the existing communication adapter firmware and its related unchanged call control APIs. It is another object of the subject disclosure to provide an architecture and related interfaces for enabling control of a protocol module multiple network trunks within one or more computers, independent of the existing communication adapter firmware and its related unchanged call control APIs.

It is another object of the subject disclosure to apply VoIP so that entities can utilize legacy hardware. Further, the entity hardware should be scalable to allow connecting more channels and features while being transparent to the user.

In one embodiment, the subject technology unifies the VoIP API using the HMP architecture and Media Resource Boards. Further, the subject technology also can unify the VoIP API and the legacy API of the regular Diva Server communication adapters. Further still, the subject technology creates hybrid installations with the legacy communication adapters and the HMP software in a single system. Preferably, the same drivers are shared between the legacy communication adapter, the Media Resource Boards and the HMP software such that the lowest level driver interface IDI stays unchanged. As a result, the existing APIs, driver middleware and the SDK advantageously are unchanged, using the same code and, thus, existing applications written therefore can still be utilized.

It should be appreciated that the present invention can be implemented and utilized in numerous ways, including without limitation as a process, an apparatus, a system, a device, a computer readable medium, and a method for applications now known and later developed. These and other unique features of the system disclosed herein will become more readily apparent from the following description and the accompanying drawings.

### Brief descriptions of the Drawings

So that those having ordinary skill in the art to which the disclosed system appertains will more readily understand how to make and use the same, reference may be had to the drawings wherein:
Figure 1 is an overview of an environment having a PBX in which an embodiment of the present invention may be used;
Figure 2 is an overview of the Diva Server architecture without using the Diva Server Virtual Signaling;
Figure 3 is an overview of the Diva Server architecture using the Diva Server Virtual Signaling while one adapter is controlling itself;
Figure 4 is an overview of the Diva Server architecture using the Diva Server Virtual Signaling while an adapter is controlling itself and other adapters;
Figure 5 is an overview of the Diva Server architecture with Diva Server Virtual Signaling while an adapter is controlled by another adapter;
Figure 6, referring to figure 3, is a flowchart illustrating the signaling between network trunks, the Transport Layer 303, the Virtual Signaling 310, the Signaling Layer 304, an API (Capi) 311 and an application 308;
Figure 7 is an overview of the Diva Server architecture in a VoIP configuration, using a legacy Diva Server adapter, a Diva Server Media Resource Board or a host based controller code emulating such Media Resource Board in software; and
Figure 9, referring to figure 7, is a flowchart illustrating the signaling between an IP socket 721, the Transport Layer 720, the Virtual Signaling 710, the Signaling Layer 704, an API (Capi) 707 and an application 708.

### DETAILED DESCRIPTION OF PREFERRED EMBODIMENTS

The present technology overcomes many of the prior art problems associated with the development, implementation and usage of new and complex communication protocols in communication products where the existing communication APIs remain unchanged and universal. The advantages, and other features of the systems and methods disclosed herein, will become more readily apparent to those having ordinary skill in the art from the following detailed description of certain preferred embodiments taken in conjunction with the drawings which set forth representative embodiments of the present invention and wherein like reference numerals identify similar structural elements.

Unless otherwise specified, the illustrated embodiments can be understood as providing exemplary features of varying detail of certain embodiments, and therefore, unless otherwise specified, features, components, modules, elements, and/or aspects of the illustrations can be otherwise combined, interconnected, sequenced, separated, interchanged, positioned, and/or rearranged without materially departing from the disclosed systems or methods. Additionally, the shapes and sizes of components are also exemplary and unless otherwise specified, can be altered without materially affecting or limiting the disclosed technology.

One or more digital data processing devices can be used in connection with various embodiments of the invention. A processor generally is logic circuitry that responds to and processes instructions that drive a digital data processing device and can include, without limitation, a central processing unit, an arithmetic logic unit, an application specific integrated circuit, a task engine, and/or any combinations, arrangements, or multiples thereof. Software or code generally refers to computer instructions which, when executed on one or more digital data processing devices, cause interactions with operating parameters, sequence data/parameters, database entries, network connection parameters/data, variables, constants, software libraries, and/or any other elements needed for the proper execution of the instructions, within an execution environment in memory of the digital data processing device(s). Those of ordinary skill will recognize that the software and various processes discussed herein are merely exemplary of the functionality performed by the disclosed technology and thus such processes and/or their equivalents may be implemented in commercial embodiments in various combinations and quantities without materially affecting the operation of the disclosed technology.

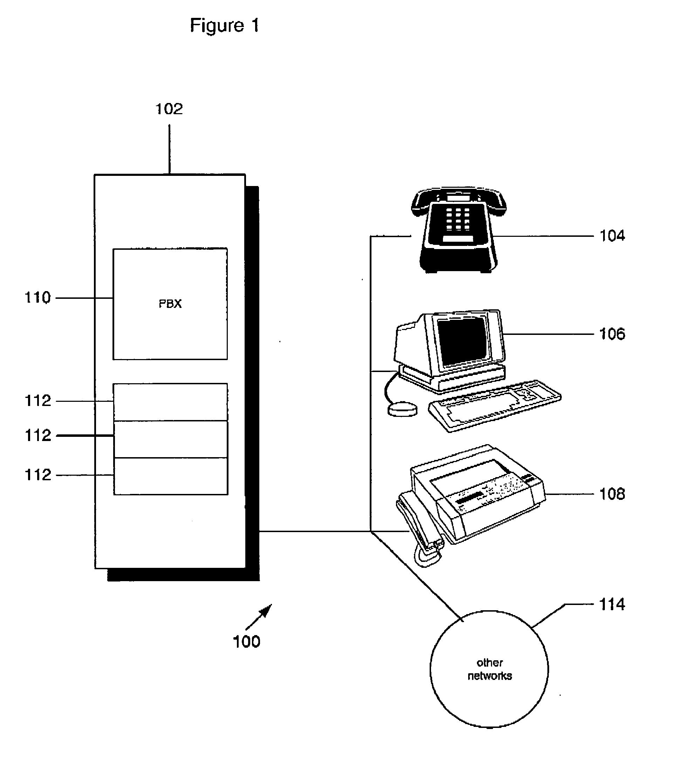

Referring to Figure 1, a high-level view of an environment or communication system including a PBX 110 is referred to generally by the reference numeral 100. An electronics rack or server 102 houses the required software and hardware for a PBX 110 to properly operate and communicate with a plurality of endpoints represented as a traditional telephone 104, computers 106, facsimile machines 108 and other like devices not shown. In this sense, the electronics rack 102 holds at least device that functions as a server. It will be appreciated that "server" refers to the program that is managing the associated resources and that several "servers" may be incorporated within one physical component or alternatively multiple components may be coupled to execute a single "server" program in order to accomplish the desired performance. It is to be appreciated that where only one telephone 104, one computer 106 and one facsimile machine 108 are shown for simplicity, several hundred or more of each of these could actually be utilized.

Other networks 114 are also in communication with the environment 100. In one embodiment, another network is a LAN in further communication with the Internet. It would be appreciated that another network could be any configuration now known and later developed including telecom networks, WAN, a token ring and the like.

The interface that allows each of the components to communicate is often proprietary to the manufacturer and, therefore, connected devices must comply with the protocol. The PBX 110 can alternatively use a standard interface that supports connection with many devices. ISDN and T1 are common digital standards for fixed devices. For simplicity, all of the switching equipment is shown within the electronic rack 102 but it would be appreciated by those of ordinary skill in the pertinent art that such localization is not required. The endpoints 104, 106, 108 may be standalone or part of a network or like arrangement. It is also envisioned that the environment 100 has routers, firewalls, subnets, buffers, buses, balancers, and like devices as would be appreciated by one of ordinary skill in the pertinent art. For clarity, such devices are not illustrated.

The electronic rack 102 houses additional hardware in a plurality of electronic racks 112. The electronic racks 112 contains memory for storing the software that provides the desired features. For example, a voicemail module is a common specific application with dedicated hardware that mimics the functions of an answering machine from a centralized location rather than at each telephone 104. In order for the voicemail module to communicate with the other components of the PBX 110, the communication protocols must be defined.

As noted above, an API is a set of definitions of the ways in which the various modules communicate with each other. In effect, the API bridges the communication gap between lower-level and higher-level software. Typically, the API provides a set of commonly-used functions so that programmers can utilize the provided functions without having to reinvent every function. Often, a program written for a first API will not work directly with another second API without an intermediate layer that adapts the program for use with the second. A commonly used API is the CAPI standard available from Eicon Networks Corp. of Montreal, Canada, based on the lowest level driver interface IDI from Eicon Networks Corp. For telephony on Microsoft Windows platforms, TAPI is a commonly used API. TAPI is middleware between the device drivers of actual hardware such as modems, and the high-level applications. Another high level API is the Diva Server Software Development Kit (hereinafter "SDK"), also available from Eicon Networks Corp.

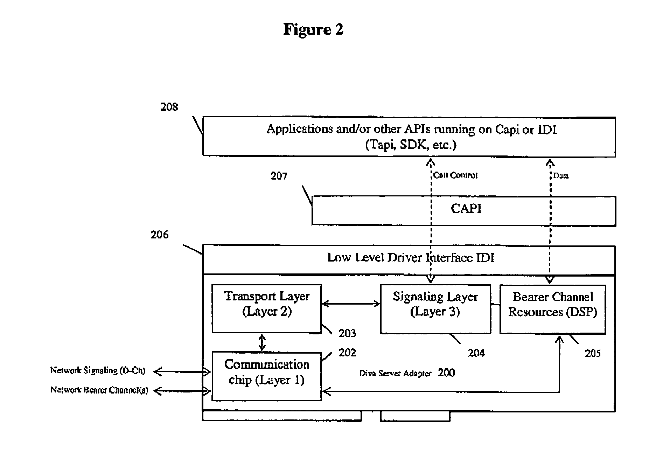

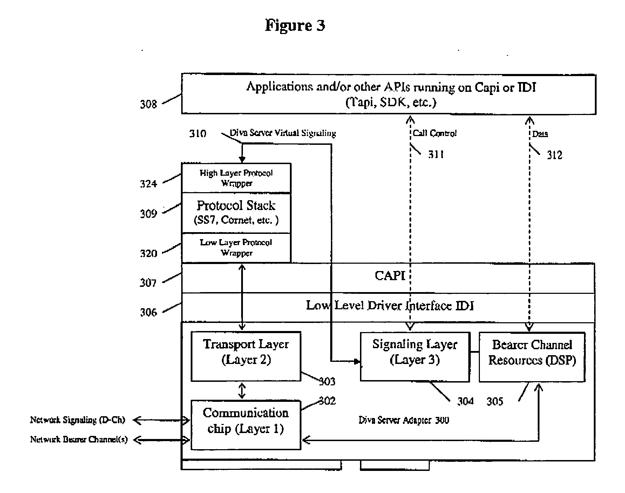

The Diva Server driver architecture is illustrated and referred to generally by the reference numeral 200 in Figure 2. Figures 3-5 incrementally include, step by step, other aspects of the subject technology. Referring to Figure 2, the Diva Server driver or communication adapter 200 with the related APIs is shown schematically for clarity and simplicity. Typically, the Diva Server communication adapter 200 is a printed circuit board or plurality of printed circuit boards connected within the racks 112 of the electronics rack 102 of Figure 1. In a preferred embodiment of the present invention, the server 102 for running the PBX 110 is a PC/AT compatible computer with at least a 133 MHz processor, a server operating system, at least 15 MB of free space on the hard drive for the adapter application, and a card slot to receive an associated communication adapter printed circuit board.

Still referring to Figure 2, the Diva Server communication adapter 200 has a communication chip (Layer 1) 202 connected with a communication network 114. The communication network 114 is able to establish calls by using network signaling where information is used like Called Party Numbers, Calling Party Numbers, e.g. commonly known as D-Channel in ISDN Networks and known as Signaling Link(s) in SS7 Networks. Once a call is connected end-to-end, the Bearer Channels are connected between two or more parties of the call, transporting, for example, the speech signal of a telephone call.

The API 208 for the Diva Server communication adapter 200 configures a Bearer Channel Resources module or DSP 205 to terminate speech, a facsimile or modem, add line echo cancellers, detect and transmit tones, transport data, and the like. The Bearer Channel data is transported between the API 208 and the Bearer Channel Resources module 205. In turn, the Bearer Channel data is transported between the Bearer Channel Resources module 205 and the communication chip 202 and, thus, finally to and from the Network Bearer Channels.

With the Diva Server communication adapter 200, the signaling information is given from the communication chip 202 to a Transport Layer module (Layer 2) 203 providing a reliable link in order to overcome communication failures such as lost frames or bit errors. The Transport Layer module 203 communicates with a Signaling Layer module 204. The Signaling Layer module 204 can be re-configured depending on the network or switch type that the Diva Server adapter 205 connects with. For example, a switch type can be Euro ISDN, 5ESS Custom (AT&T), 5ESS Ni (Avaya), QSig, and the like. An upper interface of the Signaling Layer module 204 abstracts all the different protocol types and interfaces to the Driver Interface TDI 206 of the Diva Server communication adapter 200. In addition, the Signaling Layer module 204 provides call related information such as the channel number of the communication network 114 to the Bearer Channel Resources module 205.

Referring now to Figure 3, as will be appreciated by those of ordinary skill in the pertinent art, the Diva Server communication adapter 300 utilizes similar principles to the Diva Server communication adapter 200 described above. Accordingly, like reference numerals preceded by the numeral "3" instead of the numeral "2", are used to indicate like elements whenever possible. The primary difference of the Diva Server communication adapter 300 in comparison to the Diva Server communication adapter 200 is that the Signaling Layer (Layer 3) 204 is broken into two parts; one Signaling Layer module 304 and one host based Protocol Stack module 309. By "host based", it is meant that the Protocol Stack module 309 runs outside of the Diva Server adapter 300 in the server 102. The Signaling Layer module 304 is still configured to a switch type variant, but the protocol variant is set to be used as internal protocol between the Protocol Stack 309 and the Signaling Layer 304. Thus, there is no difference between the Signaling Layer 304 and the Signaling Layer 204 except for the interface configuration because the Protocol Stack 309 emulates the behavior of the Transport Layer 203.

The Protocol Stack module 309 includes a low layer protocol wrapper 320 to adapt the Protocol Stack code to the Diva Server API 308 (e.g., CAPI or IDI). The Transport Layer (Layer 2) 303 is configured to run with the right transport protocol. As an example, if the Protocol Stack 309 abstracts towards an ISDN protocol type, the Transport Layer 303 is configured to run an ISDN transport protocol like the ITU-T protocol Q.921 or known as LAPD. Preferably, the configuration of the Transport Layer 303 is accomplished by the Protocol Stack 309. As another example, if the Protocol Stack 309 abstracts towards a SS7 network type, the Transport Layer 303 is configured to run a SS7 transport protocol like the MTP2 (Message Transfer Part 2). The Transport Layer 303 delivers raw layer 3 signaling information to the Protocol Stack 309 similarly with the Transport Layer 203 of Figure 2.

The Protocol Stack module 309 also includes a high layer protocol wrapper 324 to adapt the Protocol Stack code to the Diva Server API 308. The high layer protocol wrapper 324 opens the Diva Server API 308 and configures the interface to be linked with the Signaling Layer 304. In one embodiment, the high layer protocol wrapper 324 uses, but it is not limited to, the QSIG ISDN layer 3 protocol according to ECMA (based on ITU-T Q.931) type as Diva Server Virtual Signaling Protocol as represented by communication line 310. Preferably, the Signaling Layer module 304, the Bearer Channel Resource module 305, the Driver Interface 306, the Capi Interface 307 or any other drivers, applications or the API of SDK 308 stay substantially unchanged.

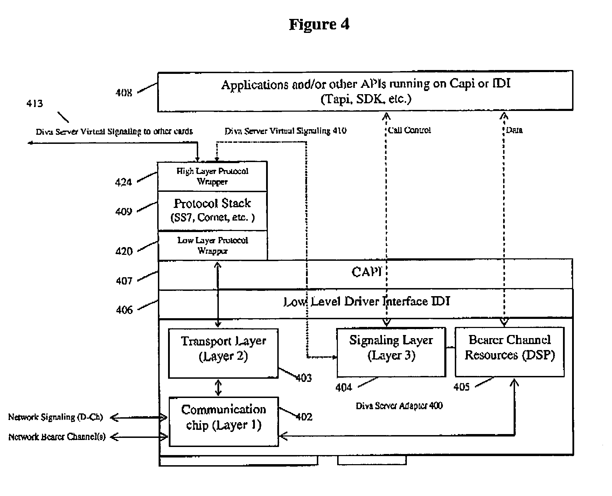

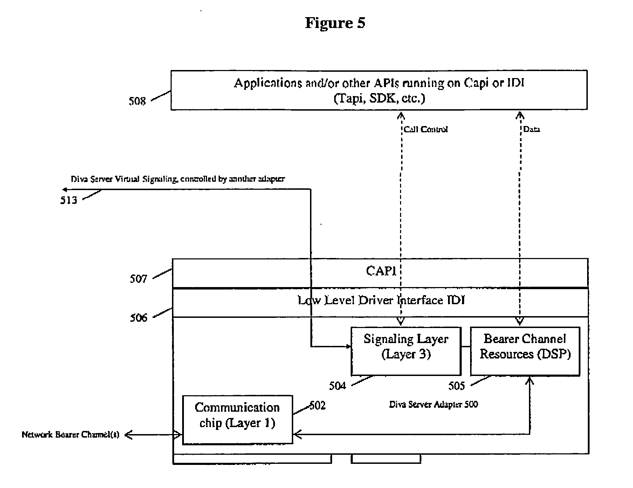

Referring to Figure 4, as will be appreciated by those of ordinary skill in the pertinent art, the Diva Server communication adapter 400 utilizes similar principles to the Diva Server communication adapters 200, 300 described above. Accordingly, like reference numerals preceded by the numeral "4" instead of the numerals "2" or "3", are used to indicate like elements whenever possible. The primary difference of the Diva Server communication adapter 400 is the addition that the High Layer Protocol Wrapper 424 of the Protocol Stack module 409 implements a configuration table storing a relationship between a trunk number variable and multiple Diva Server adapters (not shown, configured as in Figure 5) installed in a computer system. As a result, the Protocol Stack 409 controls multiple communication adapters (such as shown in Figure 5 and described below) while the applications and/or other APIs 408 stay unchanged.

Referring now to Figure 5, as will be appreciated by those of ordinary skill in the pertinent art, the Diva Server communication adapter 500 utilizes similar principles the Diva Server communication adapters 200, 300, 400 described above. Accordingly, like reference numerals preceded by the numeral "5" instead of the numerals "2", "3" or "4", are used to indicate like elements whenever possible. The Diva Server communication adapter 500 is controlled by a Protocol Stack 409 of the Diva Server communication adapter 400 of Figure 4 by using the Diva Server Virtual Signaling 413 and 513. The data transported from and to the API 508 is sent and received by the Bearer Channels of the environment 100 by using the Diva Server adapter 500 where the application 508 resides, while the call control information might come from a different Protocol Stack 409, e.g., getting the call control signaling information from different Diva Server adapter(s) 400. It is noted that the Diva Server Virtual Signaling links 413, 513 can be transported and, thus, are not limited to being within one computer system. In one embodiment, the Diva Server Virtual Signaling links 413, 513 are transported over a LAN or WAN using the Internet Protocol (IP) to another computer system (not shown).

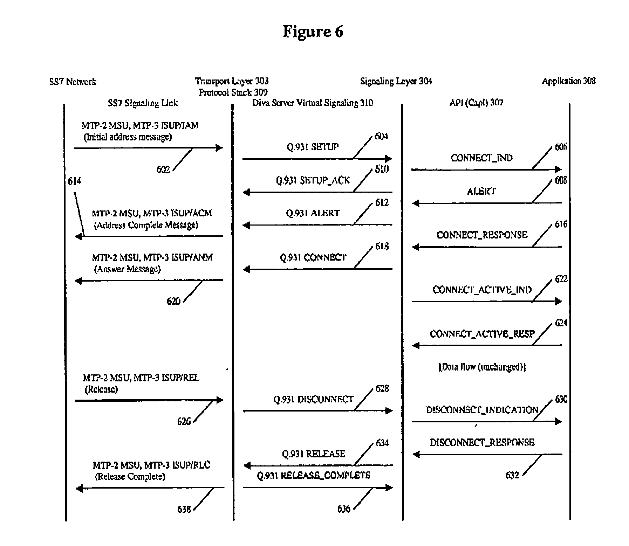

Referring to Figure 6, a signaling flow 600 is illustrated showing a complete connect and disconnect of a call using the Diva Server communication adapter 300 connected to a SS7 network. The flowchart illustrates the signaling between a SS7 link, the abstracting protocol module 309 (see Fig. 3), the signaling layer 304, the API 311 and the application. Relevant for the preferred embodiment are layer 3 messages (call control) only. The incoming call is signaled on a SS7 Network with a MTP2, MTP3, ISUP (Message Transfer Part 2 and 3, ISDN User Part) message 'Initial Address Message' (IAM) transporting call related information like Called Party Number CPN, Circuit Identification Code CIC (identifies the trunk number within a trunk group and the timeslot (or channel) within the specific trunk). The SS7 message (IAM and its layer 2 MTP2 header) is given to the Transport Layer 303 of Figure 3 at flow 602.

The Transport Layer 303 removes its layer 2 header and gives the layer 3 frame to the Protocol Stack 309. The Protocol Stack 309 converts this event to a Diva Server Virtual Signaling message of type SETUP using an ISDN protocol ECMA QSIG based on Q.931 (ITU-T) as shown in flow 604. Based on the Circuit Identification Code, the Protocol Stack 309 uses a configuration table of the High Layer Protocol Wrapper 324 to address the right Diva Server communication adapter and, within the trunk connected to this adapter, to use the right timeslot or channel. The SETUP message 604 is received by the Signaling Layer 304 as it would be received from a regular ISDN network, therefore the Signaling Layer 304 replies with a Setup_Ack message 610 according to the protocol specification. The Signaling Layer 304 reserves the given timeslot with the Bearer Channel Resources module 305, if required, and delivers the call via the IDI 306 to the Capi driver 307.

The Capi driver 307 indicates the call with a Conneet_Indication and the call related information like, e.g., the Called Party Number and Channel ID to the application 308. The application 308 replies an Alert message 608. The Capi driver 307 delivers this event to the Signaling Layer 304. The Signaling Layer 304 converts this event into the Q.931 message ALERT 612 and delivers it to the Protocol Stack 309. The Protocol Stack 309 converts this message to SS7 format into the MTP3 ISUP Address Complete message (ACM) 614. This SS7 Address Complete Message (ACM) is received by the Transport Layer 303 and adds the layer 2 MTP2 header in order to send it back to the network using the Communication Chip 302. Once the application 308 accepts the call it sends a Connect_Response message 616 back to the call control Capi 307. The Capi driver 307 delivers this event to the Signaling Layer 304. The Signaling Layer 304 converts this event into the Q.931 message CONNECT 618 and delivers it to the Protocol Stack 309. The Protocol Stack 309 converts this message to SS7 format into the MTP3 ISUP Answer message (ANM) 620. This SS7 Answer message (ANM) is received by the Transport Layer 303 and adds the MTP2 layer 2 header in order to send it back to the network using the Communication Chip 302. As a result, communication is established between the endpoints at flow 622 and data flows therebetween as illustrated by flow 624.

The remote side hangs up the call causing the network to send MTP2, MTP3, ISUP 'Release' (RLC) 626. This message is given to the Transport Layer 303 of Figure 3. The Transport Layer removes its layer 2 header and gives the layer 3 event to the Protocol Stack 309. The Protocol Stack 309 converts this event to a Diva Server Virtual Signaling 310 message of type DISCONNECT 628 based on Q.931 (TTU-T). The DISCONNECT message is received by the Signaling Layer 304 as it would be received from a regular ISDN network. The Signaling Layer 304 delivers the event via the IDI 306 to the Capi driver 307. The Capi driver 307 indicates the call clearing event with a Disconnect_Indication 630 to the application 308. The application 308 replies with a Disconnect_Response 632. The Capi driver 307 delivers this event to the Signaling Layer 304. The Signaling Layer 304 converts this event into the Q.931 message RELEASE 634 and delivers it to the Protocol Stack 309. The Protocol Stack 309 replies according to Q.931 with a RELEASE_COMPLETE 636 message to the Signaling Layer 304 to clear this call at this layer. In addition, the Protocol Stack 309 converts the RELEASE message to SS7 format into the MTP3 ISUP Release Complete (RLC) 638. This SS7 Release Complete (RLC) is received by the Transport Layer 303 and adds the layer 2 header in order to send it back to the network using the Communication Chip 302. The call is now cleared on all layers and at the network side.

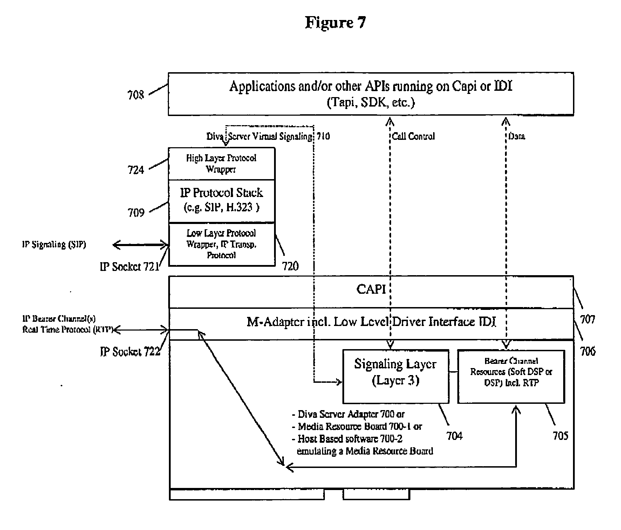

Referring now to Figure 7, as will be appreciated by those of ordinary skill in the pertinent art, the Diva Server communication adapter 700 utilizes similar principles the Diva Server communication adapters 200, 300, 400, 500 described above. Accordingly, like reference numerals preceded by the numeral "7" instead of the numerals "2", "3", "4" or "5", are used to indicate like elements whenever possible. Further, if the communication adapter is used with IP environments, it is sufficient to remove the communication layer 1 front-end chip 502 and the communication adapter 700 can serve as a Media Resource Board with identical software interfaces to the legacy communication adapter as indicated by 700-1. Still further, if the communication system does not require the presence of high performance accelerating hardware like a Media Resource Board, the communication adapter 700 can serve as a host based "virtual hardware" emulating such board as indicated by 700-2, still with identical software interfaces.

The Diva Server communication adapter 700 (and the mentioned variants) is controlled by a Protocol Stack 709 by using the Diva Server Virtual Signaling 710 as described with communication adapter 400. A primary difference of the Diva Server communication adapter 700 in comparison to the Diva Server communication adapter 400 is that the signaling data is not delivered by a telephone network, transported via the communication chip 402 and the transport layer 403 towards the protocol stack 409, but the signaling data is transferred by a VoIP network to and from the IP socket 721 and its related transport protocol (for example TCP) at the low layer protocol wrapper 720 towards the protocol stack 709. Further, the Bearer Data (media streaming) is not received and transmitted by a communication chip 402, but it is transferred via the IP socket(s) 722 at the Low Level Driver Interface IDI 706. If present with the used hardware configuration, the entire Driver Interface IDI 706 transports any data, also the media streaming data transferred via the IP socket(s) 722, per Bus Master DMA in order to reduce the consumed processor performance and to reduce the data latency.

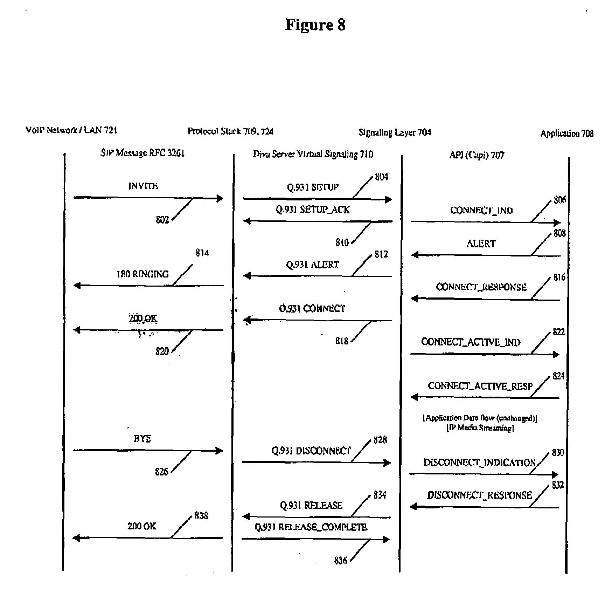

Referring to Figure 8, a signaling flow 800 is illustrated showing a complete connect and disconnect of a call using the Diva Server communication adapter 700 (and its variants) connected to a VoIP network. The flowchart illustrates the signaling between a VoIP SIP network according to RFC 3261, the abstracting protocol module 709, 724 (see Fig. 7), the signaling layer 704, the API 707 and the application 708. Relevant for the preferred embodiment are layer 3 messages (call control) only. The incoming call is signaled on a VoIP Network with a SIP message 'INVITE', transporting call related information like phone numbers, IP port numbers, voice compression types and the like. The SIP message is given to the IP Socket 721 of Figure 8 at flow 802.

The Transport Layer 720 removes its layer 2 header and gives the layer 3 frame to the Protocol Stack 709. The Protocol Stack 709 converts this event to a Diva Server Virtual Signaling message in line 710 of type SETUP using an ISDN protocol ECMA QSIG based on Q.931 (ITU-T) as shown in flow 804. The SETUP message 804 is received by the Signaling Layer 704 as it would be received from a regular ISDN network, therefore the Signaling Layer 704 replies with a Setup_Ack message. The Signaling Layer 704 is using the given IP socket port number and reserves the Bearer Channel Resources 705, if required, and delivers the call via the IDI 706 to the Capi driver 707.

The Capi driver 707 indicates the call with a Connect_Indication and the call related information like, e.g., the phone number to the application 708. The application 708 replies an Alert message 808. The Capi driver 707 delivers this event to the Signaling Layer 704. The Signaling Layer 704 converts this event into the Q.931 message ALERT 812 and delivers it to the Protocol Stack 709. The Protocol Stack 709 converts this message to SIP format into the 180_Ringing message 814. This 180_Ringing message is received by the Transport Layer 703 and adds the layer 2 header in order to send it back to the network using the IP socket 721. Once the application 708 accepts the call it sends a Connect_Response message 816 back to the call control Capi 707. The Capi driver 707 delivers this event to the Signaling Layer 704. The Signaling Layer 704 converts this event into the Q.931 message CONNECT 818 and delivers it to the Protocol Stack 709. The Protocol Stack 709 converts this message to SIP format into the 200_OK message 820. This 200_OK message is received by the Transport Layer 703 and adds the layer 2 header in order to send it back to the network using the IP socket 721. As a result, communication is established between the endpoints at flow 822 and data flows therebetween as illustrated by flow 824.

The remote side hangs up the call causing the network to send a SIP BYE message 826. This message is given to the Transport Layer 720 of Figure 7. The Transport Layer removes its layer 2 header and gives the layer 3 event to the Protocol Stack 709. The Protocol Stack 709 converts this event to a Diva Server Virtual Signaling 710 message of type DISCONNECT 828 based on Q.931 (ITU-T). The DISCONNECT message is received by the Signaling Layer 704 as it would be received from a regular ISDN network. The Signaling Layer 704 delivers the event via the IDI 706 to the Capi driver 707. The Capi driver 707 indicates the call clearing event with a Disconnect. Indication 830 to the application 708. The application 708 replies with a Disconnect_Response 832. The Capi driver 707 delivers this event to the Signaling Layer 704. The Signaling Layer 704 converts this event into the Q.931 message RELEASE 834 and delivers it to the Protocol Stack 709. The Protocol Stack 709 replies according to Q.931 with a RELEASE_COMPLETE 836 message to the Signaling Layer 704 to clear this call at this layer. In addition, the Protocol Stack 709 converts the RELEASE message into the SIP 200_OK message 838. This 200_OK message is received by the Transport Layer 720 and adds the layer 2 header in order to send it back to the network using the IP socket 721. The call is now cleared on all layers and at the VoIP network side.

It will be appreciated by those of ordinary skill in the pertinent art that the functions of several elements may, in alternative embodiments, be carried out by fewer elements, or a single element. Similarly, in some embodiments, any functional element may perform fewer, or different, operations than those described with respect to the illustrated embodiment. Also, functional elements (e.g., modules, layers, interfaces, computers, servers and the like) shown as distinct for purposes of illustralion may be incorporated within other functional elements in a particular implementation.

While the invention has been described with respect to preferred embodiments, those skilled in the art will readily appreciate that various changes and/or modifications can be made to the invention without departing from the spirit or scope of the invention as defined by the appended claims.

## Claims

1. A communication adapter 112 for facilitating communication between a low level unified protocol module and a low level abstraction protocol module in a telephone network 100, the communication adapter comprising:
(a) a memory storing an instruction set; and
(b) a processor for running the instruction set, the processor being in communication with the memory and the telephone network, wherein the processor includes:
(i) a communication layer 302 operatively connected to the telephone network for establishing calls;
(ii) a low level driver interface 306;
(iii) a signaling layer 304 for abstracting different protocol types and interfaces to the low level driver interface;
(iv) an API 308; and
(v) an abstracting protocol block for managing internal protocol, wherein the abstracting protocol block is operative to:
signal an incoming call from a first endpoint to a second endpoint;
convert the incoming call to a virtual message;
based on a circuit identification code of the virtual message, address the virtual message to a desired communication adapter, reserve a timeslot and deliver the incoming call to the API;
accept the incoming call based on the virtual message; and
establish communication between the endpoints.

2. A communication adapter as recited in Claim 1, wherein the signaling layer includes a signaling layer module 304 and the abstracting protocol block includes a host based protocol stack module 309, the signaling layer module having a protocol variant set to be used as an internal protocol between the host based protocol stack and the signaling layer.

3. A communication adapter as recited in Claim 2, wherein the abstracting protocol block further includes a low layer protocol wrapper 320 to adapt a code thereon to the API and a high layer protocol wrapper 324 to open and configure the API to be linked with the signaling layer such that the API does not need customization.

4. A communication adapter as recited in Claim 3, wherein the high layer protocol wrapper implements a configuration table storing a relationship between a trunk number variable and a plurality of communication adapters such that the host based protocol stack controls the plurality of communication adapters.

5. A communication adapter as recited in Claim 1, wherein the abstracting protocol block connects to a network.

6. A communication adapter as recited in Claim 1, wherein the abstracting protocol block connects to an IP socket.
